# EUROPÄISCHE PATENTSCHRIFT

(11) **EP 0 719 174 B1**
(45) Veröffentlichungstag und Bekanntmachung des Hinweises auf die Patenterteilung: **28.10.1998**
(21) Anmeldenummer: 94924201.0
(22) Anmeldetag: 19.08.1994
(51) Int. Cl.: B01D 47/10

(54) **VENTURIWÄSCHER MIT ZWEI EINSTELLBAREN VENTURIKEHLEN**
VENTURI CLEANING SYSTEM WITH TWO ADJUSTABLE VENTURI GROOVES
EPURATEUR A VENTURI POURVU DE DEUX GORGES A VENTURI AJUSTABLES

(30) Priorität: 15.09.1993 DE 4331301
(43) Veröffentlichungstag der Anmeldung: 03.07.1996
(73) Patentinhaber: REITHER Venturiwäscher GmbH, 53842 Troisdorf (DE)
(72) Erfinder: Reither, Karl, 53842 Troisdorf (DE)
(74) Vertreter: Lippert, Hans-Joachim, Dipl.-Ing.
(86) Internationale Anmeldenummer: DE9400959
(87) Internationale Veröffentlichungsnummer: WO9507747

(56) Entgegenhaltungen:
- DE-A- 2 113 174
- DE-B- 1 253 238
- DE-B- 2 029 088
- DE-B- 2 305 710
- DE-B- 2 417 569

## Beschreibung

Die Erfindung betrifft einen Differenzdruckwäscher, bestehend aus einem Venturikanal, der in Strömungsrichtung bis zu einem minimalen Querschnitt konvergierende und dann divergierende Seitenwände aufweist, wobei die dadurch gebildete Kehle im Bereich ihres minimalen Querschnitts die Gestalt eines Spalts in etwa rechteckiger Gestalt aufweist, einem in Strömungsrichtung hinter dem Spalt angeordneten Verdrängerkörper, der sich über die gesamte Spaltlänge erstreckt und auf den Spalt zu und von diesem weg verschiebbar gelagert ist, zwei zwischen den Wänden der Kehle und der Verdrängerkörperaußenwand in etwa parallel verlaufende Venturikehlen, deren Querschnitt durch Verschieben des Verdrängerkörpers wahlweise einstellbar sind, sowie zumindest einer über der Kehle angeordneten Waschflüssigkeits-Zuführvorrichtung.

Die Abgase technischer Prozesse sind im allgemeinen Fall Gemische aus Gasen, Dämpfen und Stäuben. Der staubförmige, d.h. disperse Anteil, kann sowohl in fester als auch in flüssiger Form im Trägergas auftreten. Die Abscheidung von festen oder flüssigen Teilchen, wie auch das Abscheiden einer gasförmigen Komponente aus dem gasförmigen Dispersionsmittel, gehören zu den Vorgängen der Stofftrennung.

Durch Beschleunigung und Verzögerung des Gasstromes und einer eingedüsten Waschflüssigkeit werden Gas, Staub und Flüssigkeitstropfen stark miteinander verwirbelt. Die Staubteilchen werden dadurch sehr rasch benetzt und chemische Reaktionen beschleunigt. Die für den Trennprozeß benötigte Energie wird der Strömungsenergie des zu reinigenden Gases entnommen. Handelt es sich insbesondere um heiße Gase, die gekühlt werden müssen, so nutzt man ferner Kondensationsvorgänge aus, die durch Enthalpieverminderung und Ausnutzung der Staubteilchen als Kondensationskeime gekennzeichnet sind.

Ein Teil der Strömungsenergie geht als Folge der Wechselwirkung zwischen der Wasserflüssigkeit und dem Dispersionsmittel verloren. Die dabei unvermeidbar entstehende Reibung führt zu einer Energiedissipation, d.h. zu einem Druckverlust und einem zusätzlichen Druckgefälle in Strömungsrichtung des Gases.

Mit dem Schwierigkeitsgrad der Stofftrennung steigt naturgemäß auch der Energieaufwand. Für hohe Anforderungen der Gasreinigung werden daher Wäscher eingesetzt, die mit großen Gasgeschwindigkeiten durchströmt werden.

Diese Naßreiniger bezeichnet man wegen der in ihnen auftretenden größeren Druckdifferenz "Differenzdruckwäscher".

Der am häufigsten eingesetzte Differenzdruckwäscher ist der Venturiwäscher, von dem es zahlreiche Ausführungsformen gibt. Typisch für diesen Wäschertyp ist das Venturirohr, in dessen engstem Querschnitt, der Kehle, die Waschflüssigkeit über eine axiale Eindüsung oder über eine Quereinspritzung mit nur geringem Druck eingegeben wird. Infolge der hohen Scherwirkung der Gasströmung werden die Flüssigkeitsteilchen in feinste Tröpfchen zerissen. Die hohe Gasbeschleunigung in der Kehle und die dadurch verursachte hohe Relativgeschwingikeit zwischen Staubteilchen und Tröpfchen ist der Grund für das sehr gute Abscheidevermögen des Venturiwäschers. Je nach Abscheideleistung liegt der Druckverlust zwischen 3.000 und 20.000 Pascal. Er hängt von der Gasgeschwindigkeit und von der eingedüsten Waschflüssigkeitsmenge ab.

Wegen der Koppelung von Abscheideleistung und Strömungsgeschwindigkeit reagiert ein Venturiwäscher sehr stark auf Lastschwankungen. Technisch begegnet man diesem Problem durch Veränderung des Querschnitts der Venturikehle, wobei der Kehlenquerschnitt rechteckig ausgeführt ist und die Längswände verstellbar sind. Das Problem der Lastschwankungen kann aber auch durch Ansaugen von Falsch- bzw. Umluft erfolgen. Beide Ansätze dem Problem der Lastschwankungen zu begegnen, sind aber mit einem hohen konstruktiven Aufwand verbunden.

Eine weitere Art von Differenzdruckwäschern sind die Ringspaltwäscher. Bei diesen wird die Querschnittsveränderung durch vertikales Verschieben eines konischen, zentral eingebauten Verdrängerkörpers vorgenommen, zum Beispiel durch einen kegelförmigen und axial beweglichen Verstellkörper, der mit dem Gehäuse einen Ringspalt bildet. Der durchströmte Ringraum zwischen dem kegelförmigen Verdrängerkörper und dem Gehäuse dient dann als Mischstrecke der Waschflüssigkeit und des zu reinigenden Gases. Aufgrund des relativ klein einstellbaren Ringspaltes sind Berieselungsdichte und Gasgeschwindigkeit außerordentlich groß, was für die Auswaschung von wesentlicher Bedeutung ist.

Der Nachteil der Ringspaltwäscher liegt aber in ihrem außerordentlich hohen konstruktiven Aufwand, da insbesondere die konischen bzw. kegelförmigen Verdrängerkörper relativ kompliziert herzustellen sind und Ringspaltwäscher gegenüber Venturiwäschern einen erhöhten Platzbedarf benötigen. Desweiteren ist die Abscheideleistung der Ringspaltwäscher im Vergleich zu den Venturiwäschern schlechter, was sich insbesondere bei der Auswaschung von Gasen mit Kondensations- und Sublimationsstäuben bemerkbar macht.

Bei einem bekannten Venturiwäscher der eingangs genannten Art (DE-B-23 05 710) ist ein im Querschnitt rechteckiger Strömungskanal vorgesehen. Dieser weist dabei eine relativ komplizierte geometrische Gestalt auf, die aus einem sich trichterförmig verengenden und anschließend hinter der engsten Stelle wieder trichterförmig erweitertem Bereich besteht. Der Verdrängerkörper hat im Längsschnitt ungefähr eine rautenförmige Gestalt, so daß zwischen dem sich erweiternden Bereich des Kanals und den Seitenflächen des Verdrängerkörpers langgestreckte Durchgänge mit konstantem Querschnitt gebildet werden. Diese Durchgänge weisen keine definierten engsten Querschnitte auf, so daß ein Venturieffekt hier nicht in vollem Umfang erreicht werden kann.

Ferner ist eine venturiartige Vorrichtung zur Befeuchtung staubhaltiger Gase bekannt (DE-B-1235238), die im wesentlichen aus einem Strömungsrohr mit einer Kehle besteht, die durch zwei axparallele, in Strömungsrichtung in etwa zylindrisch gewölbte, bis zu einem in etwa rechteckigen Spalt konvergierende und dann divergierende Seitenwände gebildet sind. Lastschwankungen werden bei dieser bekannten Vorrichtung durch die drehbar gelagerten Querrohre korrigiert, wobei der Abstand der Drehachsen der rotierenden Querrohre veränderbar ist. Bei dieser Konstruktion, die keinen stationären Venturispalt aufweist, ist auch kein Verdrängerkörper vorgesehen. Vielmehr wird die Variabilität hier durch eine sehr aufwendige Konstruktion erreicht, bei der die Querrohre drehbar und axial verstellbar sein müssen, wobei auch noch für eine zusätzliche seitliche Abdichtung gesorgt werden muß.

Der Erfindung liegt die Aufgabe zugrunde, einen Differenzdruckwäscher zu schaffen, der eine verbesserte Abscheideleistung ohne einen hohen Druckverlust aufweist, also schnell auf Lastschwankungen einstellbar ist, und mit einfachen Konstruktionsmitteln zu verwirklichen ist.

Erfindungsgemäß wird diese Aufgabe dadurch gelöst, daß der Kanal durch ein Strömungsrohr gebildet ist und daß in dem Strömungsrohr zwei die Kehle bildende Querrohre angeordnet sind.

Durch diese Maßnahme kann in einem Strömungs-bzw. Venturirohr ohne größeren kosntruktiven Aufwand eine Querschnittsveränderung im Bereich der Kehle vorgenommen werden, so daß zwei genau einstellbare Venturikehlen entstehen. Dies hat den Vorteil, daß Lastschwankungen sehr schnell und einfach begegnet werden kann, indem einfach der Verdrängerkörper verstellt wird. Ferner kann der Verdrängerkörper eine sehr simple und im Prinzip beliebige Gestalt aufweisen. Der konstruktive Aufwand ist sehr gering, denn in dem Strömungsrohr wird die Kehle durch zwei einfache Querrohre gebildet, die seitlich in das Strömungsrohr eingesetzt werden.

Diese Querrohre, die vorzugsweise genau wie das Strömungsrohr einen in etwa kreisförmigen Querschnitt aufweisen, können dabei das Strömungsrohr entweder ganz oder teilweise durchdringen. Dabei können handelsübliche Rohre verwendet werden, so daß die Herstellung spezieller Bauteilgruppen entfällt. Durch die Verbindung von solchen Rohren als Bauteile ist auch bei Differenzdruckwäschern, die für große Differenzdrucke ausgelegt sein müssen, eine kostengünstige Produktion möglich.

Um eine strömungsmechanisch möglichst günstige Gasführung zu erreichen, sind in bevorzugter Ausführung in Strömungsrichtung vor dem Spalt und/oder hinter dem Spalt zwischen der Strömungsrohr-Innenwand und den Querrohrmantelflächen Führungsbleche angebracht.

Vorzugsweise ist der Verdrängerkörper rohrförmig und weist einen kreisförmigen Querschnitt auf. Durch die Verwendung eines solchen hohlzylindrischen Verdrängerkörpers als Bauelement wird eine kostengünstige Produktion gefördert, wobei auch hier ein handelsübliches Rohr verwendet werden kann.

Es ist jedoch auch möglich, einen Verdrängerkörper zu verwenden, der eine andere Gesalt aufweist, insbesondere käme auch die Verwendung eines massivzylindrischen Verdrängerkörpers in Betracht.

Zweckmäßigerweise liegt der Verdrängerkörper mit seinen Stirnenden formschlüssig an den jeweils angrenzenden Strömungsrohr-Innenwandbereichen an.

In bevorzugter Ausführung sind in den Stirnenden des Verdrängerkörpers Ausnehmungen und an den angrenzenden Strömungsrohr-Innenwandbereichen dazu komplementäre Führungsschienen angeordnet. Dieses Merkmal erleichtert ein genaues axiales Verschieben des Verdrängerkörpers und damit ein genaues Einstellen der beiden Venturikehlspaltbreiten.

In einer weiteren bevorzugten Ausführung ist die Kehle durch den Verdrängerkörper vollständig verschließbar. Dadurch kann der Differenzdruckwascher gleichzeitig als ein Absperrventil verwendet werden, das durch einen Waschflüssigkeitsspiegel über dem zugefahrenen Verdrängerkörper sogar vollkommen gasdicht schließt. Somit können Gasabsperrschieber eingespart werden.

Des weiteren kann der Verdrängerkörper über einen Spindeltrieb verstellbar sein, welches typischerweise manuell durch ein Handrad oder dergleichen verstellt werden kann.

Es ist jedoch auch möglich, daß der Verdrängerkörper mechanisch in Abhängigkeit des Drucks steuerbar ist, wodurch

In bevorzugter Ausführung bestehen das Strömungsrohr und/oder die Querrohre und/oder der Verdrängerkörper und/oder die Führungsbleche aus korrosionsbeständigen thermoplastischen Kunststoffen, z.B. Polypropylen oder Polyvinylchlorid, unter Einsatz verfügbarer Halbzeuge.

Eine Herstellung des Differenzdruckwäschers aus Stahl oder Edelstahl ist ebenfalls möglich.

Zweckmäßigerweise erfolgt die Zuführung von Waschflüssigkeit durch mindestens eine Dralldüse.

In bevorzugter Weise wird die Waschflüssigkeit parallel zur Strömungsrichtung zugeführt, es ist jedoch denkbar, daß die Waschflüssigkeit geneigt oder senkrecht zur Strömungsrichtung erfolgt.

Die Erfindung ist in der Zeichnung beispielsweise veranschaulicht und im nachstehenden im einzelnen anhand der Zeichnung beschrieben.

Es zeigen:
- Figur 1: einen vertikalen Schnitt durch den Differenzdruckwäscher,
- Figur 2: einen Schnitt entlang der Linie I-I aus Fig. 1,
- Figur 3: einen Schnitt entlang der Linie II-II aus Fig. 1,
- Figur 4: eine vergrößerte und detaillierte Ansicht des Bereichs der Venturikehlen aus Fig. 1.

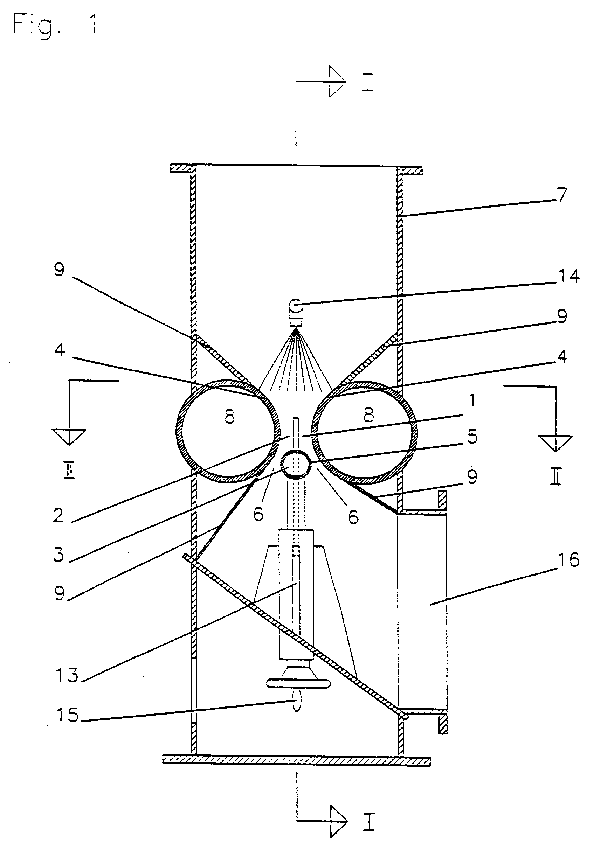

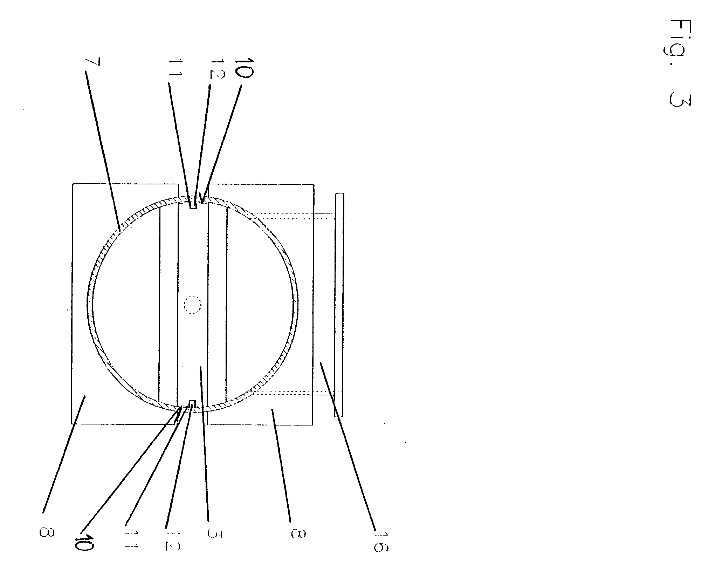

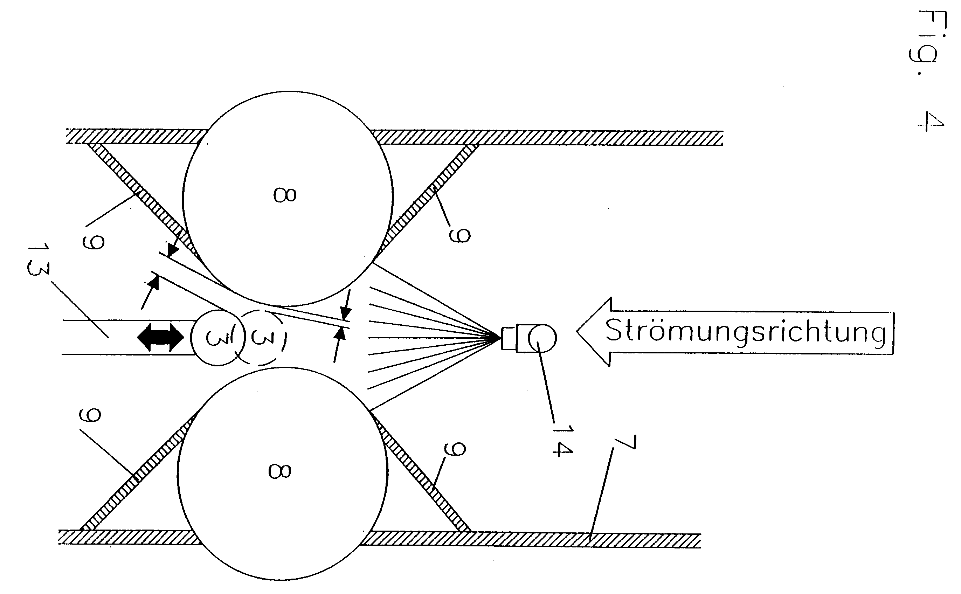

Nach der Zeichnung besteht der Differenzdruckwäscher aus einem Strömungsrohr 7, das, wie aus der Figur 3 zu ersehen ist, einen kreisförmigen Querschnitt aufweist, mit einer Kehle 1, die in etwa in der Mitte des Differenzdruckwäschers angeordnet ist. Die Kehle 1 ist durch zwei Querrohre 8, die das Strömungsrohr 7 fast vollständig durchdringen, verwirklicht. Die Querrohre 8 weisen einen kreisförmigen Querschnitt auf, wie aus den Figuren 1 und 4 zu ersehen ist.

Das Verhältnis von dem Durchmesser des Strömungsrohres 7 zu dem Durchmesser eines Querrohres 8 ist ungefähr 2:1.

Die Kehle 1 weist im Bereich ihrer engsten Stelle die Gestalt eines Spalts 2 mit in etwa rechteckigen Querschnitt auf, was aus der Figur 3 zu ersehen ist. Der Spalt ist nicht voll ständig rechteckig, sondern die Spaltbreiten sind leicht gekrümmt und werden durch die Krümmung der Innenwand des Strömungsrohrs vorgegeben.

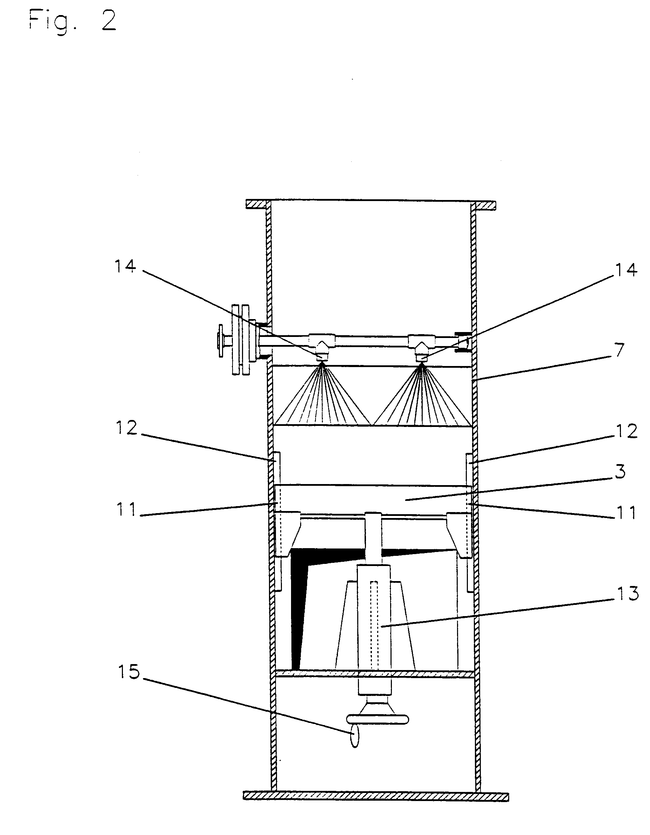

In Strömungsrichtung, welche durch einen Pfeil am oberen Bildrand in den Figuren 1, 2 und 4 angedeutet ist, ist ein Verdrängerkörper 3 hinter dem Spalt 2 angeordnet. Dieser Verdrängerkörper 3 ist in dem hier gezeigten Ausführungsbeispiel rohrförmig, d.h. , also im Prinzip ein Hohlzylinder mit kreisförmigem Querschnitt. Das Verhältnis des Durchmessers des Verdrängerkörpers 3 zum Durchmesser der Querrohre 8 ist ungefähr 1:3.

Der Verdrängerkörper 3 erstreckt sich über die gesamte Spaltlänge und ist auf den Spalt 2 zu und von diesem weg verschiebbar gelagert. Im gezeigten Ausführungsbeispiel ist der Verdrängerkörper 3 über einen Spindeltrieb 13 verstellbar. Der Spindeltrieb 13 wird manuell betätigt über ein Handrad 15.

Zwischen den Wänden 4 der Kehle 1 und der Verdrängerkörper-Außenwand 5 liegen zwei in etwa parallel verlaufende Venturikehlen 6 vor. Durch Verschieben des Verdrängerkörpers 3 sind die Querschnitte dieser beiden Venturikehlen 6 wahlweise einstellbar.

Die Figur 4 zeigt detailliert und vergrößert zwei verschiedene Einstellpositionen des Verdrängerkörpers 3 innerhalb der Kehle 1. Je weiter der Verdrängerkörper 3 auf die Kehle 1 zugefahren wird, desto enger werden die Spaltbreiten der beiden Venturikehlen 6.

Die Durchmesser der Querrohre 8 und des Verdrängerkörpers 3 sind so aufeinander abgestimmt, daß der Verdrängerkörper 3 die Kehle 1 im Extremfall vollständig verschließen kann.

Sowohl in Strömungsrichtung vor dem Spalt 2 als auch hinter dem Spalt 2 sind zwischen der Strömungsrohr-Innenwand und den Querrohrmantelflächen Führungsbleche 9 angebracht.

Wie aus Figur 3 zu ersehen ist, liegt der Verdrängerkörper 3 an den Stirnenden 10 formschlüssig an den jeweils angrenzenden Strömungsrohr- Innenwandbereichen an. Des weiteren sind in den Stirnenden 10 des Verdrängerkörpers 3 Ausnehmungen 11 und an den jeweils angrenzenden Strömungsrohr-Innenwandbereichen dazu komplementäre Führungsschienen 12 angeordnet.

Oberhalb der Kehle 1 befinden sich zwei die Waschflüssigkeit zuführende Dralldüsen 14, die so eingestellt sind, daß die Zuführung der Waschflüssigkeit parallel zur Strömungsrichtung erfolgt.

Wie aus Figur 1 ersichtlich ist, ist das Strömungsrohr 7 in etwa L-förmig weitergeführt und mit einem Flansch 16 versehen, an dem ein Zentrifugalabscheider angeschlossen werden kann.

### BEZUGSZEICHEHLISTE

- 1: Kehle
- 2: Spalt
- 3: Verdränger
- 4: Wand
- 5: Verdrängerkörper-Außenwand
- 6: Venturikehle
- 7: Srömungsrohr
- 8: Querrohr
- 9: Führungsblech
- 10: Stirnende
- 11: Ausnehmung
- 12: Führungsschiene
- 13: Spindeltrieb
- 14: Dralldüse
- 15: Handrad
- 16: Flansch

## Patentansprüche

1. Differenzdruckwäscher, bestehend aus einem Venturikanal, der in Strömungsrichtung bis zu einem minimalen Querschnitt konvergierende und dann divergierende Seitenwände aufweist, wobei die dadurch gebildete Kehle (1) im Bereich ihres minimalen Querschnitts die Gestalt eines Spalts (2) in etwa rechteckiger Gestalt aufweist, einem in Strömungsrichtung hinter dem Spalt (2) angeordneten Verdrängerkörper (3), der sich über die gesamte Spaltlänge erstreckt und auf den Spalt (2) zu und von diesem weg verschiebbar gelagert ist, zwei zwischen den Wänden (4) der Kehle und der Verdrängerkörperaußenwand (5) in etwa parallel verlaufende Venturikehlen (6), deren Querschnitt durch Verschieben des Verdrängerkörpers (3) wahlweise einstellbar sind, sowie zumindest einer über der Kehle angeordneten Waschflüssigkeits-Zuführvorrichtung, **dadurch gekennzeichnet**, daß der Kanal durch ein Strömungsrohr (7) gebildet ist und daß in dem Strömungsrohr (7) zwei die Kehle (1) bildende Querrohre (8) angeordnet sind.

2. Differenzdruckwäscher nach Anspruch 1, **dadurch gekennzeichnet**, daß die Querrohre (8) das Strömungsrohr (7) ganz oder teilweise durchdringen.

3. Differenzdruckwäscher nach Anspruch 1 oder 2, **dadurch gekennzeichnet**, daß die Querrohre (8) und/oder das Strömungsrohr (7) einen in etwa kreisförmigen Querschnitt aufweisen.

4. Differenzdruckwäscher nach einem der Ansprüche 1 bis 3, **dadurch gekennzeichnet**, daß in Strömungsrichtung vor dem Spalt (2) und/oder hinter dem Spalt (2) zwischen der Strömungsrohr-Innenwand und den Querrohrmantelflächen Führungsbleche (9) angebracht sind.

5. Differenzdruckwäscher nach einem der Ansprüche 1 bis 4, **dadurch gekennzeichnet**, daß der Verdrängerkörper (3) rohrförmig ist.

6. Differenzdruckwäscher nach Anspruch 6, **dadurch gekennzeichnet**, daß der Verdrängerkörper (3) einen kreisförmigen Querschnitt aufweist.

7. Differenzdruckwäscher nach einem der Ansprüche 1 bis 6, **dadurch gekennzeichnet**, daß der Verdrängerkörper (3) mit seinen Stirnenden (10) formschlüssig an den jeweils angrenzenden Strömungsrohr-Innenwandbereichen anliegt.

8. Differenzdruckwäscher nach einem der Ansprüche 1 bis 7, **dadurch gekennzeichnet**, daß in den Stirnenden (10) des Verdrängerkörpers (3) Ausnehmungen (11) und an den jeweils angrenzenden Strömungsrohr-Innenwandbereichen dazu komplementäre Führungsschienen (12) angeordnet sind.

9. Differenzdruckwäscher nach einem der Ansprüche 1 bis 8, **dadurch gekennzeichnet**, daß die Kehle (1) durch den Verdrängerkörper (3) vollständig verschließbar ist.

10. Differenzdruckwäscher nach einem der Ansprüche 1 bis 9, **dadurch gekennzeichnet**, daß der Verdrängerkörper (3) über einen Spindeltrieb (13) verstellbar ist.

11. Differenzdruckwäscher nach einem der Ansprüche 1 bis 10, **dadurch gekennzeichnet**, daß der Verdrängerkörper (3) manuell verstellbar ist.

12. Differenzdruckwäscher nach einem der Ansprüche 1 bis 11, **dadurch gekennzeichnet**, daß der Verdrängerkörper (3) mechanisch in Abhängigkeit des Drucks steuerbar ist.

13. Differenzdruckwäscher nach einem der Ansprüche 1 bis 12, **dadurch gekennzeichnet**, daß das Strömungsrohr 7 und/oder die Querrohre (8) und/oder der Verdrängerkörper (3) und/oder die Führungsbleche (9) aus korrosionsbeständigen thermoplastischen Kunststoffen bestehen.

14. Differenzdruckwäscher nach einem der Ansprüche 1 bis 13, **dadurch gekennzeichnet**, daß die Zuführung der Waschflüssigkeit durch mindestens eine Dralldüse (14) erfolgt.

15. Differenzdruckwäscher nach einem der Ansprüche 1 bis 14, **dadurch gekennzeichnet**, daß die Zuführung der Waschflüssigkeit parallel zur Strömungsrichtung erfolgt.

## Claims

1. Differential pressure cleaner comprising a venturi channel which converges in the direction of flow to a minimum cross-section and then is provided with diverging side walls (14), wherein a throttle (1) formed thereby displays in its minimum cross-section a shape of a substantially rectangular slot (2), a displacement body (3) being arranged downstream of the slot (2) extending over the entire length of the slot (2) and mounted in such a way so as to be movable towards and away from the slot (2), two substantially parallel venturi grooves (6) arranged between the diverging side walls (4) of the throttle (1) and the outer wall (5) of the displacement body (3), the cross-sections of the two venturi grooves (6) being adjustable by moving the displacement body (3), and at least one cleaning fluid feed device fitted over the throttle (1), **characterized in that** the venturi channel is formed by a flow pipe (7) and that two transverse pipes (8) are arranged in the flow pipe (7) to form the throttle (1).

2. Differential pressure cleaner according to claim 1, **characterized in that** the transverse pipes (8) penetrate the flow pipe (7) completely or partially.

3. Differential pressure cleaner according to claim 1 or 2, **characterized in that** each of the two transverse pipes (8) and/or the flow pipe comprise a substantially circular cross-section.

4. Differential pressure cleaner according to one of the claims 1 to 3, **characterized in that** guide plates (9) are arranged between the inner wall of the flow pipe and the surface areas of the transverse pipes, upstream and/or downstream of the slot (2).

5. Differential pressure cleaner according to one of the claims 1 to 4, **characterized in that** the displacement body (3) is of tubular design.

6. Differential pressure cleaner according to claim 6, **characterized in that** the displacement body (3) has a substantially circular cross-section.

7. Differential pressure cleaner according to one of the claims 1 to 6, **characterized in that** the face ends (10) of the displacement body (3) are in positive contact with the adjacent inner wall areas of the flow pipe.

8. Differential pressure cleaner according to one of the claims 1 to 7, **characterized in that** recesses (11) are provided in the face ends (10) of the displacement body (3) and that matching guide rails (12) are arranged on the adjacent inner wall areas of the flow pipe.

9. Differential pressure cleaner according to one of the claims 1 to 8, **characterized in that** the throttle (1) can be closed completely by the displacement body (3).

10. Differential pressure cleaner according to one of the claims 1 to 9, **characterized in that** the displacement body (3) can be adjusted via a spindle drive (13).

11. Differential pressure cleaner according to one of the claims 1 to 10, **characterized in that** the displacement body (3) can be adjusted manually.

12. Differential pressure cleaner according to one of the claims 1 to 11, **characterized in that** the displacement body (3) can be mechanically controlled as a function of the pressure.

13. Differential pressure cleaner according to one of the claims 1 to 12, **characterized in that** the flow pipe (7) and/or the transverse pipes (8) and/or the displacement body (3) and/or the guide plates (9) are made of corrosion-resistant thermoplastic materials.

14. Differential pressure cleaner according to one of the claims 1 to 13, **characterized in that** the cleaning fluid is injected by means of at least one swirl nozzle (14).

15. Differential pressure cleaner according to one of the claims 1 to 14, **characterized in that** the cleaning fluid is injected parallel to the direction of flow.

## Revendications

1. Laveur à pression différentielle constitué d'un canal venturi présentant des parois latérales, qui, dans la direction d'écoulement, convergent jusqu'à atteinte d'une section transversale d'aire minimale puis vont en divergeant, le col (1) constitué de ce fait présentant, dans la zone de sa section transversale d'aire minimale, la forme d'un interstice (2) à configuration à peu près rectangulaire, d'un corps de refoulement (3) disposé derrière l'interstice (2) dans la direction de l'écoulement et s'étendant sur la totalité de la longueur de l'interstice et monté déplaçable sur l'interstice (2), de façon à pouvoir aller vers lui et s'en écarter, de deux cols de venturi (6), s'étendant à peu près parallèlement entre les parois (4) du col et la paroi extérieure (5) du corps de refoulement, cols dont l'aire de section transversale est réglable à volonté par déplacement du corps de refoulement, ainsi qu'au moins d'un dispositif d'amenée de liquide de lavage, disposé au-dessus du col caractérisé en ce que le canal est constitué par un tube d'écoulement (7) et en ce que deux tubes transversaux (8) constituant le col (1) sont disposés dans le tube d'écoulement (7).

2. Laveur à pression différentielle selon la revendication 1, caractérisé en ce que les tubes transversaux (8) traversent en totalité ou partiellement le tube d'écoulement (7).

3. Laveur à pression différentielle selon la revendication 1 ou 2, caractérisé en ce que les tubes transversaux (8) et/ou le tube d'écoulement (7) présentent une section transversale à forme à peu près circulaire.

4. Laveur à pression différentielle selon l'une des revendications 1 à 3, caractérisé en ce que des tôles de guidage (9) sont montées, en observant dans la direction d'écoulement, devant l'interstice (2) et/ou derrière l'interstice (2), entre la paroi intérieure du tube d'écoulement et les surfaces d'enveloppe du tube transversal.

5. Laveur à pression différentielle selon l'une des revendications 1 à 4, caractérisé en ce que le corps de refoulement (3) est de configuration tubulaire.

6. Laveur à pression différentielle selon la revendication 5, caractérisé en ce que le corps de refoulement (3) a une section transversale de forme circulaire.

7. Laveur à pression différentielle selon l'une des revendications 1 à 6, caractérisé en ce que le corps de refoulement (3) appuie avec ajustement de forme, par ses extrémités frontales (10), sur chacune des zones de parois intérieures de tubes d'écoulement limitrophes.

8. Laveur à pression différentielle selon l'une des revendications 1 à 7, caractérisé en ce que dans les extrémités frontales (10) du corps de refoulement (3) sont ménagés des évidements (11) et sur les zones de parois intérieures de tubes d'écoulement chaque fois limitrophes sont disposées des glissières de guidage (12) leurs étant complémentaires.

9. Laveur à pression différentielle selon l'une des revendications 1 à 8, caractérisé en ce que le col (1) est susceptible d'être obturé complètement par le corps de refoulement (3).

10. Laveur à pression différentielle selon l'une des revendications 1 à 9, caractérisé en ce que le corps de refoulement (3) est réglable par l'intermédiaire d'une transmission à broche filetée (13).

11. Laveur à pression différentielle selon l'une des revendications 1 à 10, caractérisé en ce que le corps de refoulement (3) est réglable manuellement.

12. Laveur à pression différentielle selon l'une des revendications 1 à 11, caractérisé en ce que le corps de refoulement (3) est susceptible d'être commandé mécaniquement en fonction de la pression.

13. Laveur à pression différentielle selon l'une des revendications 1 à 12, caractérisé en ce que le tube d'écoulement (7) et/ou les tubes transversaux (8) et/ou le corps de refoulement (3) et/ou les tôles de guidage (9) sont constitués de matières synthétiques thermoplastiques résistantes à la corrosion.

14. Laveur à pression différentielle selon l'une des revendications 1 à 13, caractérisé en ce que l'amenée de liquide de lavage s'effectue par au moins une buse à rotation (14).

15. Laveur à pression différentielle selon l'une des revendications 1 à 14, caractérisé en ce que l'amenée de liquide de lavage s'effectue parallèlement à la direction d'écoulement.
